(19) Europäisches Patentamt
European Patent Office
Office européen des brevets

(11) Veröffentlichungsnummer : **0 295 384 B1**

(12) **EUROPÄISCHE PATENTSCHRIFT**

(45) Veröffentlichungstag der Patentschrift : **24.07.91 Patentblatt 91/30**

(51) Int. Cl.[5] : **C01B 15/04,** C01B 15/055, B01J 2/30

(21) Anmeldenummer : **88106109.7**

(22) Anmeldetag : **16.04.88**

(54) **Verfahren zur Verminderung der Neigung zum Zusammenbacken von teilchenförmigen Aktivsauerstoffverbindungen.**

(30) Priorität : **19.06.87 DE 3720277**

(43) Veröffentlichungstag der Anmeldung : **21.12.88 Patentblatt 88/51**

(45) Bekanntmachung des Hinweises auf die Patenterteilung : **24.07.91 Patentblatt 91/30**

(84) Benannte Vertragsstaaten : **AT BE CH DE FR GB GR IT LI NL SE**

(56) Entgegenhaltungen :
**EP-B- 0 103 416**
**DE-A- 2 534 390**
**DERWENT ACESSION NR.85-095250 Questel Telesystemes (WPIL) DERWENT PUBLICATIONS LTD., London & JP-A-60-042 206 (NIPPON PEROXIDE KK)**

(73) Patentinhaber : **Degussa Aktiengesellschaft**
**Weissfrauenstrasse 9**
**W-6000 Frankfurt am Main 1 (DE)**

(72) Erfinder : **Ruhs, Alexander, Dr.**
**Untere Kanalstrasse 3**
**W-7888 Rheinfelden (DE)**

**EP 0 295 384 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung richtet sich auf ein Verfahren zur Verminderung der Neigung zum Zusammenbacken von teilchenförmigen Aktivsauerstoffverbindungen, insbesondere Natriumpercarbonat.

Aktivsauerstoffverbindungen, wie beispielsweise anorganische oder organische Wasserstoffperoxid abspaltende Verbindungen oder anorganische oder organische Persäuren finden als Bleichmittel, insbesondere in Wasch-, Bleich- und Reinigungsmitteln, Anwendung. Nun ist aber bekannt, daß einige Aktivsauerstoffverbindungen bei Längerer Lagerung zum Zusammenbacken neigen. Das in Säcken, Containern oder Silos gelagerte Produkt verklumpt und verhärtet in solchen Fällen, wodurch die Handhabung, wie zum Beispiel Förderung oder Dosierung, erschwert oder gar unmöglich gemacht wird.

Eine besonders starke Neigung zum Verklumpen und Zusammenbacken zeigt bekanntermaßen Natriumpercarbonat. Diese negative Eigenschaft ist neben der im Vergleich zu Natriumperborathydraten geringeren Aktivsauerstoffstabilität ein zusätzlicher Hinderungsgrund, Natriumpercarbonat in breiterem Umfang als Bleichkomponente zu verwenden. Während zur Stabilisierung von Natriumpercarbonat viele Verfahren vorgeschlagen wurden, konnte das Problem des Zusammenbackens noch nicht befriedigend gelöst werden. Auch nach unterschiedlichen Verfahren hergestelltes und stabilisiertes Natriumpercarbonat weist eine mehr oder weniger starke Neigung zum Zusammenbacken auf.

Die DE-OS 2700797 lehrt nun ein Verfahren zur Verbesserung der Lagerbeständigkeit, insbesondere Silolagerbeständigkeit von sauerstoffabgebenden Verbindungen, wie beispielsweise Natriumpercarbonat, das darin besteht, die sauerstoffabgebende Verbindung zusammen mit Natriumtripolyphosphat und/oder Natriumpyrophosphat, gegebenenfalls unter Zusatz von anderen Waschmittelbuildern und Granulierhilfsmitteln, die eine Aktivsauerstoff stabilisierende Wirkung haben, wie beispielsweise Wasserglas, Magnesiumphosphat oder Hexametaphosphat, in Gegenwart von Wasser zu granulieren und die gebildeten Granulate zu trocknen. Die sauerstoffabgebende Verbindung und das Phosphat werden im Gewichtsverhältnis 1 : 0,1 bis 1 : 1, bevorzugt 1 : 0,2 bis 1 : 0,4, granuliert. Unter den fakultativ in die Granulate einarbeitbaren Waschmittelbestandteilen werden ohne nähere Kennzeichnung Phosphonsäuren genannt. Hinweise, welche Phosphonsäuren gemeint sind, in welcher Menge sie eingesetzt werden und welchen Effekt sie ausüben, werden nicht gegeben.

Nachteilig an diesem vorbekannten Verfahren ist einmal das relativ aufwendige Granulierverfahren, das sich an die eigentliche Herstellung der Aktivsauerstoffverbindung als völlig separate Verfahrensstufe anschließt. Darüber hinaus weisen die so hergestellten Granulate einen dem Mischungsverhältnis entsprechend niedrigeren Aktivsauerstoffgehalt auf und enthalten gegebenenfalls Bestandteile. welche einer breiten Anwendung in unterschiedlichsten Formulierungen entgegenstehen. Der Hersteller von Aktivsauerstoffverbindungen ist daher bestrebt, diesen möglichst wenige Hilfsstoffe in möglichst geringer Konzentration zuzusetzen, um unbedingt erforderliche Stoffeigenschaften, wie eine geringe Zusammenbackneigung, zu erhalten.

Aufgabe der Erfindung ist demgemäß ein Verfahren zur Verminderung der Zusammenbackneigung von teilchenförmigen Aktivsauerstoffverbindungen zu schaffen, das in einfacher Weise einem der bekannten Verfahren zur Herstellung der Aktivsauerstoffverbindung angeschlossen und ohne nennenswerten zusätzlichen apparativen Aufwand sicher und einfach durchgeführt werden kann.
Eine weitere Aufgabe besteht darin, die Einsatzmenge an Hilfsstoffen zur Erzielung der verminderten Zusammenbackneigung niedrig zu halten und den Aktivsauerstoffgehalt nicht oder nur unwesentlich zu erniedrigen.

Die Aufgabe wird gelöst durch Inkontaktb ringen von teilchenförmigen Aktivsauerstoffverbindungen mit einer eine Phosphonsäureverbindung enthaltenden wäßrigen Lösung und Trocknen des behandelten teilchenförmigen Produktes, wobei das Verfahren dadurch gekennzeichnet ist, daß man die Aktivsauerstoffverbindung in einer solchen Menge mit einer eine oder mehrere zur Chelatkomplexbildung befähigte Phosphonsäureverbindungen enthaltenden wäßrigen Lösung in Kontakt bringt, daß das Gewichtsverhältnis der Aktivsauerstoffverbindung zur Phosphonsäureverbindung 100 : 0,1 bis 100 : 10 beträgt.

Die Ansprüche 2 bis 10 richten sich auf bevorzugte Ausführungsformen des Verfahrens. Insbesondere richtet sich Anspruch 2 auf die erfindungsgemäße Behandlung des stark zum Zusammenbacken neigenden Natriumpercarbonats.

Zur Beurteilung der Neigung zum Zusammenbacken dient nachfolgender Test : Etwa 700 g des zu untersuchenden Produktes werden in ein 1000 ml Glas mit Schliffstopfen gefüllt ; nach einwöchiger Lagerung bei Raumtemperatur (ca. 22°C) im verschlossenen Glas wird das Glas gekippt und das Fließverhalten beurteilt. Die Beurteilungsskala reicht von der Bewertungszahl 10 bis 1, wobei bedeuten :

10 Fließt frei wie trockener Sand
9 Fließt mit Verzögerung und Stocken
8 Leichtes Schütteln bewirkt Rieseln, eventuell bleiben kleine Klümpchen
7 Ein kräftiger Schlag bewirkt Zerfall bis auf kleine Klümpchen
6 Mehrere Schläge sind nötig

5 Viele Schläge sind nötig, es bleiben dennoch Klumpen
4 Klumpen durch Schütteln nicht zerstörbar
3 Die verbleibenden Klumpen lassen sich durch Fingerdruck leicht zerkleinern
2 Es bleiben harte Klumpen, die nur mit Kraftaufwand zerstört werden können
1 Produkt ist hart verbacken.

Im Rahmen der Untersuchung der Zusammenbackneigung von Natriumpercarbonat wurde festgestellt, daß die Zusammenbackneigung von im sog. Naßverfahren hergestelltem Natriumpercarbonat im allgemeinen groß ist und zudem erheblichen Schwankungen unterliegt. Im sog. Naßverfahren wird wäßrige Wasserstoffperoxidlösung mit in Wasser gelöster bzw. suspendierter Soda umgesetzt und Natriumpercarbonat aus der wäßrigen Phase kristallisiert. In der Produktion wirkt sich die Zusammenbackneigung so aus, daß im Zeitraum von etwa 2 bis 24 Stunden nach Herstellung des Natriumpercarbonats eine Verhärtung desselben im Sack oder im Silo auftritt. Überraschenderweise führen eine Änderung des Kornspektrums in Richtung eines groberen und einheitlicheren Korns sowie der Einsatz von Fließhilfsmitteln, wie hydrophilen und hydrophoben pyrogenen Kieselsäuren oder Magnesiumcarbonat, zu keiner nennenswerten Reduzierung der Neigung zum Zusammenbacken.

Es wurde gefunden, daß die Zusammenbackneigung von Natriumpercarbonat deutlich vermindert werden kann, wenn die Zusammensetzung der Oberfläche der Kristalle oder Agglomerate gezielt verändert wird :

Wäscht man im Naßverfahren erzeugtes Natriumpercarbonat-Naßsalz oder nach einem anderen Herstellungsverfahren, beispielsweise durch Umsetzung von wäßrigem Wasserstoffperoxid mit einer wäßrigen Sodalösung in einem Wirbelschichttrockner, erhaltenes Natriumpercarbonat-Trockensalz auf einer Labornutsche mit einer vorzugsweise 15 Gew.-% 1-Hydroxyethan-1,1-diphosphonsäure enthaltenden wäßrigen Lösung und trocknet anschließend bei etwa 50°C im Trockenschrank, so erhält man völlig freifließende Produkte, welche nach einer Woche eine Bewertungszahl 10 im Zusammenbacktest aufweisen. Eine gewisse Verminderung der Backneigung läßt sich auch durch Waschen mit Wasser erzielen, nicht jedoch durch Waschen mit verdünnter Phosphorsäure. Um einen nennenswerten Effekt durch das Waschen mit Wasser allein zu erzielen, bedarf es aber einer großen Menge Wasser, was sowohl hinsichtlich der damit verbundenen Ausbeuteminderung als auch Vergrößerung des Laugenhaushalts im Betriebsmaßstab nicht tolerierbar ist. Durch Verwendung einer wäßrigen Lösung ausgewählter Phosphonsäuren ist es dagegen möglich, bereits mit einer geringen Menge der Lösung die gewünschte Verminderung der Zusammenbackneigung zu erzielen.

Percarbonate mit stark verminderter Backneigung sind auch durch Aufsprühen einer wäßrigen Lösung der erfindungsgemäß ausgewählten Phosphonsäuren auf Percarbonat-Trocken- oder -Naßsalz und anschließendes Trocknen zugänglich.

Durch Inkontaktbringen von Percarbonat mit einer wäßrigen Lösung, enthaltend eine oder mehrere zur Chelatkomplexbildung befähigte Phosphonsäureverbindungen, gelingt es auch im Produktionsmaßstab mit einer geringen Menge einer solchen Lösung, die Neigung zum Zusammenbacken um zwei bis vier Bewertungsstufen zu vermindern. Vorzugsweise verwendet man eine solche Lösung als Waschlösung, beispielsweise in einer Fest-Flüssig-Trennvorrichtung, wie einer Zentrifuge ; nach dem Trocknen erhält man rieselfähiges Percarbonat mit sehr geringer Backneigung. Man kann aber die wäßrige Lösung der Phosphonsäureverbindung auch auf das Percarbonat aufsprühen und gleichzeitig oder daran anschließend trocknen ; eine besonders geeignete Vorrichtung hierzu ist ein Wirbelschichttrockner.

Es wird angenommen, daß durch das Inkontaktbringen der teilchenförmigen Aktivsauerstoffverbindung mit der wäßrigen Lösung einer oder mehrerer Phosphonsäureverbindungen die Zusammensetzung der Oberfläche der Teilchen verändert wird. So werden Verunreinigungen und/oder andere Bestandteile, welche an der Oberfläche der Teilchen der Aktivsauerstoffverbindung — es kann sich um Kristalle oder Agglomerate fester, im allgemeinen kristalliner, Teilchen handeln — haften und für die starke Neigung zum Zusammenbacken und gegebenenfalls auch geringere Aktivsauerstoff-Stabilität verantwortlich sind, teilweise entfernt — bei der Ausführungsform Waschen in einer Fest-Flüssig-Trennvorrichtung — und/oder durch die Phosphonsäureverbindung unschädlich gemacht. Die Phosphonsäureverbindung wird an der Oberfläche der Kristalle adsorbiert, wodurch die Zusammenbackneigung gemindert und gleichzeitig die Aktivsauerstoff-Stabilität gesteigert wird. Die adsorbierte Menge ist im allgemeinen gering, wodurch der Aktivsauerstoffgehalt praktisch nicht erniedrigt wird. Durch den fehlenden Wascheffekt führt die Ausführungsform Sprühen und Trocknen im allgemeinen zu einem etwas geringeren Effekt.

Es ist bekannt, daß zur Chelatkomplexbildung mit Schwermetallen,welche Aktivsauerstoffverbindungen zersetzen, befähigte Phosphonsäureverbindungen zur Stabilisierung von Aktivsauerstoffverbindungen bei deren Herstellung oder Formulierung zu Wasch- und Reinigungsmitteln Anwendung finden. So wird in der DE-OS 2622458 gelehrt, 1-Hydroxyethan-1,1-diphosphonsäure enthaltendes Wasserstoffperoxid zur Herstellung von Natriumpercarbonat in einem Naßverfahren zu verwenden. Bei der Nacharbeitung dieses Verfahrens wurde aber ein Percarbonat erhalten, das stark zusammenbackte. Auch ein Zusatz der oben genannten Phosphonsäure zur Sodaeinsatzlösung des Natriumpercarbonat-Herstellverfahrens gemäß DE-PS 2800760 führte zu keiner nennenswerten Minderung der Zusammenbackneigung. Keines der bekannten Verfahren richtet sich auf die Verwendung solcher Phosphonsäureverbindungen zur Minderung des Zusammenbackens, noch werden diese Verbindungen in wäßriger Lösung erfindungsgemäß mit den bereits gebildeten Aktivsauerstoffverbindungen in Kontakt gebracht.

Das erfindungsgemäße Verfahren richtet sich auf teilchenförmige Aktivsauerstoffverbindungen. Diese können anorganisch sein, beispielsweise Persalze, wie Percarbonate und Perborate, oder Salze von Peroxosäuren, wie Persulfate. Auch organische Aktivsauerstoffverbindungen, beispielsweise feste Peroxycarbonsäuren oder Wasserstoffperoxid-Anlagerungsverbindungen, wie Percarbamid, sind dem Verfahren zugänglich. Besonders vorteilhaft ist das Verfahren für jene Aktivsauerstoffverbindungen anwendbar, welche in wäßriger Phase hergestellt werden und eine relativ hohe Wasserlöslichkeit aufweisen—in diesen Fällen bereitet die Waschung der Kristalle mit einer wirksamen Menge Wasser zur Entfernung anhaftender Mutterlauge und/oder Verunreinigungen und Minderung der Backneigung wegen der damit verbundenen Ausbeuteverluste häufig Probleme. Ganz besonders geeignet ist daher das erfindungsgemäße Verfahren für Percarbonate, wie Natriumpercarbonat der Formel $2Na_2CO_3 \cdot 3H_2O_2$, insbesondere im Naßverfahren hergestelltes Natriumpercarbonat.

Als zur Chelatkomplexbildung befähigte Phosphonsäureverbindung, welche einzeln oder im Gemisch mehrerer in der wäßrigen Lösung mit der Aktivsauerstoffverbindung in Kontakt gebracht wird, kommen bevorzugt Phosphonsäuren und/oder deren Alkali-, Erdalkali- oder Ammoniumsalze zur Anwendung, wobei die Phosphonsäuren bevorzugt sind. Es versteht sich, daß beim Inkontaktbringen einer alkalisch wirkenden Aktivsauerstoffverbindung, wie zum Beispiel Natriumpercarbonat, mit einer Phosphonsäure, diese ganz oder teilweise in ein Salz überführt werden und sich als solches Salz auf der Oberfläche der Aktivsauerstoffverbindung befinden kann.

Die Anwendungskonzentration der Phosphonsäureverbindung in der wäßrigen Lösung beträgt im allgemeinen 0,5 bis 60 Gew.%, bevorzugt 5 bis 30 Gew.%.

Es ist möglich, daß die eine oder mehrere Phosphonsäureverbindungen enthaltende wäßrige Lösung noch weitere Stoffe zum Optimieren der Eigenschaften der Aktivsauerstoffverbindung enthält, wie andere Stabilisatoren, Z.B. Magnesiumsalze, Wasserglas, komplexbildende Aminocarbonsäuren, Pyridincarbonsäuren und Phosphanoxide mit bevorzugt $C_8$- bis $C_{12}$-Alkylgruppen. Auch wasserlösliche Verbindungen, welche zur Umhüllung von Aktivsauerstoffverbindungen Anwendung finden können, wie Natriumsulfat, Natriumcarbonate, Natriumsilikate, Natriumphosphate und Borsäureverbindungen, können zugegen sein.

Das Gewichtsverhältnis der Aktivsauerstoffverbindung zu der/den in der wäßrigen Lösung gelösten Phosphonsäureverbindungen beträgt 100 zu 0,1 bis 100 zu 10, bevorzugt ist ein Verhältnis von 100 : 0,5 bis 100 : 5 und ganz besonders bevorzugt 100 : 1 bis 100 : 3. Die optimal wirksame Menge wird der Fachmann durch einen einfach durchführbaren Testversuch ermitteln, wobei er diesen Test gemäß der in der Praxis von ihm vorgesehenen Verfahrensweise—z.B. Waschen in der Zentrifuge oder Sprühen in das Wirbelbett—anpassen wird. Das Verhältnis richtet sich nach dem Reinheitsgrad und der Verbackungsneigung der Aktivsauerstoffverbindung und der Wirksamkeit der Phosphonsäureverbindung.

Bevorzugt verwendet man als Phosphonsäureverbindung eine oder mehrere Diphosphonsäureverbindungen der allgemeinen Formel I,

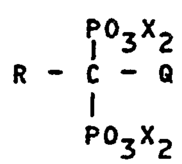

(I),

worin R = Wasserstoff, Methyl oder Ethyl, X = Wasserstoff, Alkali-, Erdalkali- oder Ammoniumkation und Q = Wasserstoff, eine OH— oder $NY_2$-Gruppe bedeuten und Y = H, $CH_2COOX$ oder $CH_2PO_3X_2$ ist. Verbindungen mit Q gleich OH und R gleich Methyl sind bevorzugt. Ganz besonders vorteilhaft ist 1-Hydroxyethan-1,1-diphosphonsäure, die im Handel meist als 50 bis 60 gew.%ige wäßrige Lösung angeboten wird.

Auch Phosphonsäureverbindungen der allgemeinen Formel (II) sind im erfindungsgemäßen Verfahren verwendbar. Solche Phosphonsäureverbindungen sind auch als Stabilisatoren für Aktivsauerstoffverbindungen beschrieben worden.

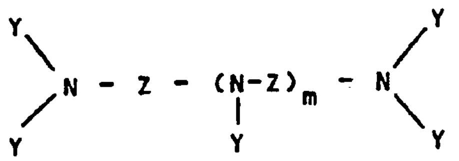 (II),

In (II) bedeuten Y die Gruppe $CH_2PO_3X_2$, Z eine Alkylengruppe mit 2 bis 6 C-Atomen, bevorzugt Ethylen, 1,2-Propylen und 1,3-Propylen oder 2-Hydroxy-1,3-propylen, m eine ganze Zahl von 0 bis 4, bevorzugt 0 oder 1, und X Wasserstoff, Alkali- oder Erdalkalimetall- oder Ammoniumkation ; ein oder zwei Y-Gruppen können $CH_2COOX$ oder $CH_2CH_2OH$ sein ; Phosphonsäureverbindungen mit X = H sind bevorzugt. Besonders geeignet sind Verbindungen vom Typ Ethylendiamin-tetra (methylenphosphonsäure) und Diethylentriamin-penta (methylenphosphonsäure).

Auch Nitrilo-tris (methylenphosphonsäure) sowie deren Alkali-, Erdalkali- und Ammoniumsalze sind verwendbar.

Wie schon gesagt, ist es ganz besonders vorteilhaft, die teilchenförmige Aktivsauerstoffverbindung, bevorzugt im Anschluß an ihre Herstellung in wäßriger Phase, durch Waschen mit der eine oder mehrere Phosphonsäureverbindungen enthaltenden wäßrigen Lösung miteinander in Kontakt zu bringen und das durch Zentrifugieren oder Filtrieren von überschüssiger Lösung befreite feuchte Produkt zu trocknen. Der Effekt ist besonders gut und das Verfahren besonders einfach handhabbar, wenn man die nasse Aktivsauerstoffverbindung, wie z.B. im Naßverfahren hergestelltes Natriumpercarbonat, in einer Zentrifuge mit der Phosphonsäureverbindung enthaltenden Lösung wäscht, wobei die Lösung aufgesprüht und das Produkt von überschüssiger Lösung befreit wird. Nach dieser Behandlung wird das Produkt getrocknet, wobei dies bei Temperaturen unterhalb merklicher Zersetzung der Aktivsauerstoffverbindung und unterhalb des Schmelzpunktes erfolgt. Im allgemeinen werden Aktivsauerstoffverbindungen bei 30 bis 95°C, bevorzugt in der Wirbelschicht und/oder bei vermindertem Druck getrocknet. Natriumpercarbonat wird bevorzugt bei etwa 50°C in der Wirbelschicht getrocknet.

Bei Natriumpercarbonat verwendet man zur Inkontaktbringung bevorzugt eine 3-30 gew.%ige, insbesondere 10-20 gew.%ige, wäßrige Lösung von 1-Hydroxyethan-1,1-diphosphonsäure, wobei das Gewichtsverhältnis von Natriumpercarbonat zu 1-Hydroxyethan-1,1-diphosphonsäure 100 : 0,5 bis 100 : 3 beträgt.

Die durch das erfindungsgemäße Verfahren ermöglichte verminderte Neigung zum Zusammenbacken der Aktivsauerstoffverbindung wirkt sich sehr günstig aus : Anbackungen an den Wänden des Absackbankers kommen nicht mehr vor ; bei der Lagerung im Sack treten auch nach mehrwöchiger Lagerzeit keine oder nur geringfügige Verhärtungen auf, wobei letztere durch die mechanische Beanspruchung bei der üblichen Handhabung beseitigt werden und kaum störend wirken. Das erfindungsgemäße Verfahren gestattet ferner die Minderung der Zusammenbackneigung, ohne den Aktivsauerstoffgehalt zu mindern — gegebenenfalls wird dieser verfahrensbedingt sogar geringfügig erhöht. Ein weiterer positiver Nebeneffekt des Verfahrens ist die Verbesserung der Aktivsauerstoff-Stabilität bei feuchtwarmer Lagerung und insbesondere in Gegenwart von Schwermetallen. Die erfindungsgemäß hergestellten Produkte sind als Bleichkomponenten in Wasch-, Bleich- und Reinigungsmitteln verwendbar, in welchen sie sich durch ihre gute Lagerstabilität und geringe Verbackungsneigung auszeichnen.

Die folgenden Beispiele machen das Verfahren und die hiermit erzielbaren Vorteile deutlich :

Beispiel 1 (Vergleichsbeispiel)

Natriumpercarbonat wurde gemäß Beispiel 1 der DE-OS 26 22 458 hergestellt. Eine 2 g/l 1-Hydroxyethan-1,1-diphosphonsäure enthaltende Wasserstoffperoxidlösung wurde unter Rühren und Kühlen in eine Sodasuspension, welche auch Natriumpercarbonat, Wasserglas, Natriumhexametaphosphat und Kochsalz enthielt, kontinuierlich eingetragen. Nach Kristallisation, Stabilisierung, Abtrennung und Trocknen erhielt man ein Natriumpercarbonat, das nach einwöchiger Lagerung im Backtest eine Bewertungszahl von 6 hatte, d.h. eine hohe Neigung zum Verbacken aufwies.

Beispiel 2

Natriumpercarbonat, im Produktionsmaßstab hergestellt unter Bedingungen der DE-PS 28 00 760 — Naßverfahren.

Das Naßsalz wurde in dem erfindungsgemäßen Verfahren mit einer wäßrigen Lösung von 1-Hydroxyethan-1,1-diphosphonsäure behandelt : Die Lösung wurde in der Zentrifuge auf das Naßsalz gesprüht und überschüssige Lösung abzentrifugiert. Daran anschließend wurde im Wirbelbetttrockner bei ca 50°C getrocknet.

Die Tabelle zeigt die Konzentration der eingesetzten Phosphonsäurelösungen sowie das Gewichtsverhältnis Natriumpercarbonat-Naßsalz (Feuchtegehalt 7-10 Gew.%, bez. auf das Naßsalz) zur eingesetzten Phosphonsäure, ferner die Ergebnisse des Backtests sowie Klimatests.

Das eingesetzte Natriumpercarbonat hatte einen Aktivsauerstoffgehalt von ca. 14,0%, bezogen auf Trockensalz ; durch die erfindungsgemäße Behandlung änderte sich der Aktivsauerstoffgehalt praktisch nicht.

| Anwendungskonzentration der Phosphonsäure | Gewichtsverhältnis Natriumpercarbonat: Phosphonsäure | Bewertungszahl im Backtest (nach 1 Woche) | Aktivsauerstoffverlust (%) nach 10 Tagen bei 30° C und 92,9% rel. Feuchte |
|---|---|---|---|
| | unbehandelt | 6 | 25 - 30 |
| 7,5 | 100 : 0,75 | 8 | |
| 7,5 | 100 : 1,5 | 8 - 9 | |
| 15 | 100 : 1,5 | 9 | 12 - 15 |
| 15 | 100 : 2,25 | 9 (-8) | |
| 15 | 100 : 3,0 | 9 - 8 | |
| 30 | 100 : 3,0 | 8 | |

Anm.: Die Ergebnisse im Backtest und Klimatest geben die Streubreite aus je drei Versuchen an.

## Patentansprüche

1. Verfahren zur Verminderung der Neigung zum Zusammenbacken von teilchenförmigen Aktivsauerstoffverbindungen durch Inkontaktbringen derselben mit einer eine Phosphonsäureverbindung enthaltenden wäßrigen Lösung und Trocknen des behandelten teilchenförmigen Produktes, dadurch gekennzeichnet, daß man die Aktivsauerstoffverbindung in einer solchen Menge mit einer eine oder mehrere zur Chelatkomplexbildung befähigte Phosphonsäureverbindungen enthaltenden wäßrigen Lösung in Kontakt bringt, daß das Gewichtsverhältnis der Aktivsauerstoffverbindung zur Phosphonsäureverbindung 100 : 0,1 bis 100 : 10 beträgt.

2. Verfahren nach Anspruch 1, dadurch gekennzeichnet, daß man Natriumpercarbonat als Aktivsauerstoffverbindung verwendet.

3. Verfahren nach Anspruch 1 oder 2, dadurch gekennzeichnet, daß man Phosphonsäuren und/oder deren Alkali-, Ammonium- oder Erdalkalisalze als Phosphonsäureverbindung verwendet, wobei die Phosphonsäuren bevorzugt sind.

4. Verfahren nach Ansprüchen 1 bis 3, dadurch gekennzeichnet, daß man die Aktivsauerstoffverbindung mit einer 0,5 bis 60 Gew.% Phosphonsäureverbindung enthaltenden wäßrigen Lösung in Kontakt bringt.

5. Verfahren nach Anspruch 4, dadurch gekennzeichnet, daß man eine 5 bis 30 Gew.% Phosphonsäureverbindung enthaltende wäßrige Lösung verwendet.

6. Verfahren nach Ansprüchen 1 bis 5, dadurch gekennzeichnet, daß man als Phosphonsäureverbindung

eine oder mehrere Diphosphonsäureverbindungen der allgemeinen Formel (I) verwendet

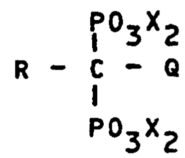

(I)

worin R = H, $CH_3$ oder $C_2H_5$ ; X = H, Alkali-, Erdalkali- oder Ammoniumkation ; Q = H, OH oder $NY_2$ mit Y = H, $CH_2CO_2X$ oder $CH_2PO_3X_2$ bedeuten und Verbindungen mit Q = OH und R = $CH_3$ insbesondere in Form der freien Säuré bevorzugt sind.

7. Verfahren nach Ansprüchen 1 bis 5, dadurch gekennzeichnet, daß man als Phosphonsäureverbindung eine oder mehrere Verbindungen der allgemeinen Formel (II) verwendet

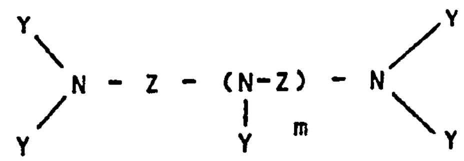

(II)

worin Y die Gruppe $CH_2PO_3X_2$, Z eine Alkylengruppe mit 2- bis 6 C-Atomen, bevorzugt Ethylen-, 1,2- oder 1,3-Propylen- oder 2-Hydroxy-1,3-propylen-, m eine ganze Zahl von 0 bis 4, bevorzugt 0 oder 1, und X Wasserstoff, Alkalimetall-, Erdalkalimetall- oder Ammoniumkation bedeuten und ein oder zwei Y-Gruppen auch $CH_2COOX$ oder $CH_2$-$CH_2OH$ sein können.

8. Verfahren nach Ansprüchen 1 bis 7, dadurch gekennzeichnet, daß man die Aktivsauerstoffverbindung durch Aufsprühen mit einer eine oder mehrere Phosphonsäureverbindungen enthaltenden wäßrigen Lösung in Kontakt bringt und gleichzeitig oder daran anschließend trocknet.

9. Verfahren nach Ansprüchen 1 bis 7, dadurch gekennzeichnet, daß man die Aktivsauerstoffverbindung durch Waschen mit einer eine oder mehrere Phosphonsäureverbindungen enthaltenden wäßrigen Lösung in Kontakt bringt und das durch Filtrieren oder Zentrifugieren von der überschüssigen Lösung befreite feuchte Produkt trocknet.

10. Verfahren nach Ansprüchen 1 bis 9, dadurch gekennzeichnet, daß man, Natriumpercarbonat mit einer 3 bis 30 Gew.% 1-Hydroxyethan-1,1-diphosphonsaüre enthaltenden wäßrigen Lösung in einer solchen Menge in Kontakt bringt, daß das Gewichtsverhältnis von Natriumpercarbonat zu 1-Hydroxyethan-1,1-diphosphonsäure 100 : 0,5 bis 100 : 3 beträgt.

## Revendications

1. Procédé pour diminuer la tendance à l'agglomération de composés à oxygène actif sous forme de particules par mise en contact de ceux-ci avec une solution aqueuse contenant un dérivé d'acide phosphonique et séchage du produit sous forme de particules traité, caractérisé en ce que le composé à oxygène actif est mis en contact avec une solution aqueuse contenant un ou plusieurs dérivés d'acide phosphonique aptes à la formation de complexes chelatants en quantité telle que le rapport pondéral du composé à oxygène actif dérivé d'acide phosphonique s'élève de 100 : 0,1 à 100 : 10.

2. Procédé selon la revendication 1, caractérisé en ce que l'on utilise le percarbonate de sodium comme composé à oxygène actif.

3. Procédé selon la revendication 1 ou la revendication 2, caractérisé en ce que l'on utilise des acides phosphoniques et/ou leurs sels alcalins, d'ammonium ou alcalino-terreux comme dérivés d'acide phosphonique, pour lesquels les acides phosphoniques sont les préférés.

4. Procédé selon les revendications 1 à 3, caractérisé en ce que l'on met en contact le composé à oxygène actif avec une solution aqueuse contenant de 0,5 à 60% en poids du dérivé d'acide phosphonique.

5. Procédé selon la revendication 4, caractérisé en ce que l'on utilise une solution aqueuse contenant de 5 à 30% en poids de dérivé d'acide phosphonique.

6. Procédé selon les revendications 1 à 5, caractérisé en ce que l'on utilise comme dérive d'acide phosphonique un ou plusieurs dérivés d'acide diphosphonique de formule générale :

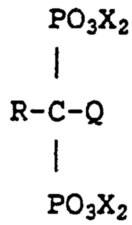

(I)

dans laquelle : R = H, $CH_3$ ou $C_2H_5$ ; X = H, un cation alcalin, alcalino-terreux ou ammonium, Q = H, OH ou $NY_2$ avec Y = H, $CH_2CO_2H$ ou $CH_2PO_3X_2$ et les composés pour lesquels Q = OH et R = $CH_3$ — en particulier sous forme d'acide libre sont les préférés.

7. Procédé selon les revendications 1 à 5, caractérisé en ce que l'on utilise comme dérivé d'acide phosphonique un ou plusieurs composés de formule générale (I) :

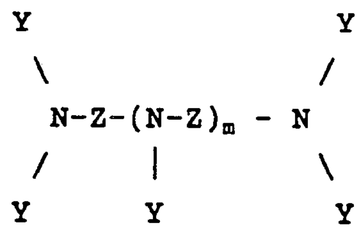

(II)

dans laquelle Y signifie le groupe $CH_2PO_3X_2$, Z un radical alcoylène ayant de 2 à 6 atomes de carbone, de préférence éthylène, 1,2- ou 1,3-propylène ou 2-hydroxy-1,3-propylène, m un nombre entier de 0 à 4 de préférence 0 ou 1 et X de l'hydrogène, un cation alcalin, alcalino-terreux ou d'ammonium et un ou deux groupes Y peuvent être aussi $CH_2COOX$ ou $CH_2CH_2OH$.

8. Procédé selon les revendications 1 à 7, caractérisé en ce que l'on met en contact le composé à oxygène actif l'un avec l'autre par pulvérisation d'une solution aqueuse contenant un ou plusieurs dérivés d'acide phosphonique et simultanément ou consécutivement ou sèche.

9. Procédé selon les revendications 1 à 7, caractérisé en ce que l'on met en contact le composé à oxygène actif l'un avec l'autre par lavage avec une solution aqueuse contenant un ou plusieurs dérivés d'acide phosphonique et que l'on sèche le produit humide débarrassé par filtration ou centrifugation de la solution en excédent.

10. Procédé selon les revendications 1 à 9, caractérisé en ce que l'on met en contact — de préférence selon la revendication 9 — le percarbonate de sodium avec une solution aqueuse contenant de 3 à 30% en poids d'acide 1-hydroxyéthane-1,1-diphosphonique en une quantité telle que le rapport pondéral du percarbonate de sodium à l'acide 1-hydroxyéthane-1,1-diphosphonique s'élève à 100 : 0,5 à 100 : 3.

**Claims**

1. A process for reducing the tendency of particulate active oxygen compounds to agglomerate together by bringing the said compounds into contact with an aqueous solution containing a phosphonic acid compound and drying the treated particulate product, characterised in that the active oxygen compound is brought in such a quantity into contact with an aqueous solution containing one or more phosphonic acid compounds capable of chelate complex formation that the ratio by weight of the active oxygen compound to the phosphonic acid compound is from 100 : 0.1 to 100 : 10.

2. A process according to Claim 1, characterised in that the active oxygen compound used is sodium percarbonate.

3. A process according to Claim 1 or Claim 2, characterised in that the phosphonic acid compounds used are phosphonic acids and/or their alkali metal, ammonium or alkaline earth metal salts, phosphonic acids being preferred.

4. A process according to Claims 1 to 3, characterised in that the active oxygen compound is brought into contact with an aqueous solution containing 0.5 to 60% by weight of phosphonic acid compound.

5. A process according to Claim 4, characterised in that an aqueous solution containing 5 to 30% by weight of phosphonic acid compound is used.

6. A process according to Claims 1 to 5, characterised in that the phosphonic acid compound used consists of one or more diphosphonic acid compounds corresponding to the general formula (I)

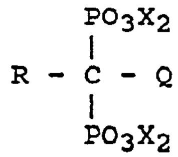

(I)

wherein R = H, $CH_3$ or $C_2H_3$ ; X = H, alkali metal cation, alkaline earth metal cation or ammonium cation ; Q = H, OH or $NY_2$ wherein Y = H, $CH_2CO_2X$ or $CH_2PO_3X_2$, and compounds in which Q = OH and R = $CH_3$ are preferred, in particular in the form of the free acid.

7. A process according to Claims 1 to 5, characterised in that the phosphonic acid compound used consists of one or more compounds corresponding to the general formula (II)

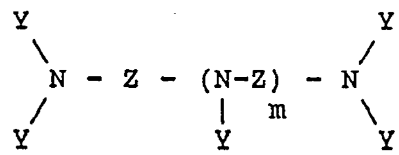

(II)

wherein Y denotes the group $CH_2PO_3X_2$, Z denotes an alkylene group having 2 to 6 carbon atoms, preferably ethylene, 1,2- or 1,3-propylene or 2-hydroxy-1,3-propylene, m denotes an integer from 0 to 4, preferably 0 or 1, and X denotes hydrogen or an alkali metal, alkaline earth metal or ammonium cation and one or two groups denoted by Y may also be $CH_2COOX$ or $CH_2$-$CH_2OH$.

8. A process according to Claims 1 to 7, characterised in that the active oxygen compound is brought into contact with an aqueous solution containing one or more phosphonic acid compounds by spraying and is dried at the same time or thereafter.

9. A process according to Claims 1 to 7, characterised in that the active oxygen compound is brought into contact with an aqueous solution containing one or more phosphonic acid compounds by washing, and the moist product, freed from excess solution by filtration or centrifuging, is dried.

10. A process according to Claims 1 to 9, characterised in that sodium percarbonate is brought in such a quantity into contact with an aqueous solution containing 3 to 30% by weight of 1-hydroxyethane-1,1-diphosphonic acid that the ratio by weight of sodium percarbonate to 1-hydroxyethane-1,1-diphosphonic acid is from 100 : 0.5 to 100 : 3.